**Europäisches Patentamt**

**European Patent Office**

**Office européen des brevets**

(11) Veröffentlichungsnummer: **0 165 494**
**A1**

(12) # EUROPÄISCHE PATENTANMELDUNG

(21) Anmeldenummer: **85106258.8**

(22) Anmeldetag: **22.05.85**

(51) Int. Cl.⁴: **A 47 J 31/54**
**A 47 J 31/10, B 67 D 3/04**
**B 67 D 3/00**

(30) Priorität: **19.12.84 DE 3446214**
**24.05.84 DE 8415818 U**
**24.05.84 DE 8415819 U**

(43) Veröffentlichungstag der Anmeldung:
**27.12.85 Patentblatt 85/52**

(84) Benannte Vertragsstaaten:
**CH FR GB IT LI**

(71) Anmelder: **EMIDE-METALLINDUSTRIE Gebr. Streicher**

**D-7209 Denkingen(DE)**

(72) Erfinder: **Schaub, Klaus**
**Lange Staige 1**
**D-7211 Frittlingen(DE)**

(74) Vertreter: **Patentanwälte Kohler - Schwindling - Späth**
**Hohentwielstrasse 41**
**D-7000 Stuttgart 1(DE)**

(54) **Küchengerät.**

(57) Ein Küchengerät weist ein Gehäuse, ein Wassergefäß, eine Heizschlange (4) zum Erwärmen des Wassers und einen oberhalb einer Abstellplatte (11) für ein Auffanggefäß angeordneten Heißwasserauslaß (5) auf.

Um größere Mengen Heißwasser aufeinmal zur Verfügung zu haben und gut dosieren zu können, wie dies für Suppenzubereitungen und Heißgetränke wünschenswert ist, ist das Wassergefäß als mit der Heizschlange (4) wärmeleitend verbundene Heißwasserbehälter (3) ausgebildet, der an seiner Unterseite in den Heißwasserauslaß (5) übergeht. Der Heißwasserablauf (5) ist mit einem Ventil (7) versehen und das Ventil (7) ist mittels eines an dem Gehäuse angeordneten Betätigungselementes (8) betätigbar.

Croydon Printing Company Ltd.

Fig.1

Anmelder:
EMIDE Metallindustrie
Gebr. Streicher
7209 Denkingen

Stuttgart, den 20.5.1984
Gm 1071 EP W/Pi

## Küchengerät

Die Erfindung betrifft ein Küchengerät, insbesondere zum Aufbrühen von Suppenzubereitungen, Heißgetränken oder dergleichen mit einem Gehäuse, einem Wassergefäß, einer Heizschlange zum Erwärmen des Wassers und einem oberhalb einer Abstellplatte für ein Auffanggefäß angeordneten Heißwasserauslaß.

Küchengeräte dieser Art sind allgemein als Kaffeemaschinen oder dergleichen bekannt.

Die bekannten Geräte sind üblicherweise als Durchlauferhitzer ausgebildet und das Heißwasser strömt aus dem im oberen Bereich des Küchengerätes angeordneten Heißwasserauslaß kontinuierlich in das Auffanggefäß, beispielsweise einen mit Kaffeepulver gefüllten Filtereinsatz einer Kaffeekanne.

Da die bekannten Küchengeräte, wie bereits erwähnt, als Durchlauferhitzer arbeiten, wird eine verhältnismäßig lange Zeit benötigt, um eine größere Menge Wasser auf Siedetemperatur zu erhitzen, beispielsweise eine Menge zwischen einem viertel und einem ganzen Liter.

Diese verhältnismäßig lange Dauer ist nicht nur wegen des damit verbundenen Zeitverlustes nachteilig, es gibt nämlich darüberhinaus auch Speisen, zu deren Zubereitung Heißwasser benötigt wird, wobei jedoch aufgrund der Besonderheit der Speise das Heißwasser mit einem Mal zugeführt werden muß.

Als Beispiel hierfür seien moderne Suppenzubereitungen genannt. Diese Zubereitungen bestehen aus einer vorgefertigten, eingedickten Suppe, die durch Hinzufügen einer bestimmten Menge Heißwasser verdünnt wird. Wichtig ist dabei jedoch ferner, daß die Suppenzubereitung nach dem Hinzufügen des Heißwassers auch aufquillt, wofür einige Minuten Zeit benötigt werden. Nach Ablauf der Aufquellzeit steht ein essfertiges Gericht von zuträglicher Temperatur zur Verfügung.

Bei dieser Suppenzubereitung muß jedoch wegen des genannten Quellvorganges das Heißwasser mit einem Mal zugefügt werden und es ist nicht möglich, es, wie bei einer üblichen Kaffeemaschine, nach und nach zutropfen zu lassen.

Der Erfindung liegt daher die Aufgabe zugrunde, ein Küchengerät der eingangs genannten Art dahingehend weiterzubilden, daß eine gewisse Menge Heißwasser insgesamt erhitzt und unter beliebiger Dosierung abgezapft werden kann.

Diese Aufgabe wird erfindungsgemäß dadurch gelöst, daß das Wassergefäß als mit der Heizschlange wärmeleitend verbundener Heißwasserbehälter ausgebildet ist, der an seiner Unterseite in den Heißwasserauslaß übergeht, daß der Heißwasserablauf mit einem Ventil versehen ist und daß das Ventil mittels eines an dem Gehäuse angeordneten Betätigungselementes betätigbar ist.

Die der Erfindung zugrunde liegende Aufgabe wird damit vollkommen gelöst, weil in dem Heißwasserbehälter eine bestimmte Menge Heißwasser, beispielsweise ein viertel Liter oder ein halber Liter oder noch mehr insgesamt erhitzt wird und dann durch Betätigen des Betätigungselementes dosiert in einen Auffangbehälter abgelassen werden kann, der z.B. ein Behälter mit einer industriell vorgefertigten Suppenzubereitung sein kann oder aber auch ein Trinkgefäß mit einem Instant-Pulver eines Kaffee- oder Kakaogetränks.

Bei einer Ausgestaltung der Erfindung ist am Gerät eine Halterung vorgesehen, an der ein Filterträger für einen Kaffee-Filter, insbesondere Papierfilter, unterhalb des Heißwasserauslasses lösbar befestigt ist und der Filterträger weist in seinem Boden mindestens eine im Abstand oberhalb der Bodenplatte angeordnete Auslauföffnung auf.

Es muß dabei zwischen der Bodenplatte und der Auslauföffnung so viel Platz zur Verfügung stehen, daß eine übliche Kaffeetasse unter die Auslauföffnung gestellt werden kann.

Das auf diese Weise geschaffene, zur Zubereitung von Filterkaffee geeignete Gerät unterscheidet sich von herkömmlichen Kaffeemaschinen mit Durchlauferhitzer dadurch, daß ein Überlaufrohr nicht benötigt wird. Von Vorteil ist gegenüber den herkömmlichen Kaffeemaschinen, daß das Erhitzen der für eine Tasse bestimmten Wassermenge sehr viel rascher erfolgen kann, weil der zum Wassererhitzer gehörende Behälter es ermöglicht, eine größere Heizleistung als bei den üblichen Kaffeemaschinen vorzusehen. Gegenüber den herkömmlichen Espressomaschinen unterscheidet sich das erfindungsgemäße Gerät dadurch, daß es keine Wasserpumpe benötigt.

Der Filterträger kann dann, wenn er nicht benötigt wird, einfach vom Gerät entfernt und an geeigneter Stelle abgestellt werden, beispielsweise auf der Oberseite des Geräts, wenn diese dafür ausgebildet ist. Da die Auslauföffnung des Filterträgers tiefer liegt als der Bodenablauf des Wassererhitzers, kann es insbesondere dann, wenn ein relativ niedriger Behälter, beispielsweise eine Tasse, mit Heißwasser gefüllt werden soll, zweckmäßig sein, den Filterträger ohne Kaffeefilter ins Gerät einzusetzen. Das Wasser fließt dann aus der Auslauföffnung des Filterträers relativ dicht über der Tasse aus und dadurch wird ein Spritzen des Wassers verhindert.

Bei einer Ausführungsform der Erfindung ist der Filterträger zur Aufnahme eines ebenen kreisförmigen Filterpapierstücks ausgebildet. Dadurch ergibt sich vorteilhaft eine geringe Bauhöhe des Filterträgers. Die Fläche, an der das Filterpapier anliegt, ist in herkömmlicher Weise mit Rippen o.dgl. Vorsprüngen versehen, so daß der fertige Kaffee im Bereich zwischen dem Filterpapier und dessen Abstützung ungehindert abfließen kann.

Bei einer Ausführungsform der Erfindung ist im Filterträger ein aus dem Filterträger lösbarer Einsatz eingesetzt, der einen mit mindestens einem Wasserdurchlaß versehenen, im wesentlichen ebenen Boden als Auflage für das Filterpapier aufweist. Hier ergibt sich der Vorteil, daß der Einsatz schnell entfernt werden kann, wenn der gesamte Filterträger vom Gerät gelöst ist. Daher ist es möglich, eine Mehrzahl derartiger Einsätze vorrätig zu halten und diese dann, wenn mehrere Tassen Kaffee zubereitet werden sollen, bereits mit je einem Filterpapier zu versehen und auf dieses Kaffeepulver zu geben, und es kann dann nach dem Zubereiten jeweils einer Tasse Kaffee der Einsatz rasch gewechselt werden. Es ist daher nicht erforderlich, eine Mehrzahl der größeren und aufwendigeren Filterträger vorzusehen. Ist der Einsatz entfernt, so kann der Filterträger in der oben geschilderten Weise verwendet werden, um einen möglichst niedrig liegenden Wasserablauf für das heiße Wasser zu schaffen.

Bei einem weiteren Ausführungsbeispiel der Erfindung weist das Ventil einen oberen, an einer Öffnung des Wasserbehälters angeschlossenen rohrförmigen und raumfesten Abschnitt und einen unteren, in der gemeinsamen Achsrichtung der Abschnitte zwischen zwei Endstellungen beweglichen weiteren rohrförmigen Abschnitt sowie ein Verschlußstück auf, das in der einen Endstellung des unteren Abschnittes den Durchfluß durch die Abschnitte freigibt und in der anderen Endstellung den Durchfluß versperrt, wobei der obere Abschnitt mit dem unteren Abschnitt über mindestens einen balgenartigen Abschnitt flüssigkeitsdicht verbunden ist.

Bei bekannten Auslaufventilen befindet sich das Verschlußstück üblicherweise im oberen rohrförmigen Abschnitt und besteht aus einer Kugel, einem Kegel o.dgl., die von oben mittels einer Schraubenfeder gegen einen kegeligen Ventilsitz gedrückt werden. Der untere rohrförmige Abschnitt ist als separates Teil ausgebildet, das den oberen Abschnitt teleskopartig umgreift und gegenüber diesem axial verschiebbar ist. Der untere Abschnitt ist mit einem zentrischen Stift versehen, der in der Schließstellung des Ventils nur bis unmittelbar an die Kugel oder den Kegel heranreicht, beim Hochbewegen des unteren Abschnittes diese jedoch von ihrem Ventilsitz abhebt, so daß das Heißwasser an der Kugel bzw. dem Kegel und dem Stift vorbei durch den unteren Abschnitt auslaufen kann.

Zum Betätigen des bekannten Ventils kann der untere Abschnitt aus einer unteren Endstellung, der Schließstellung, in seine obere Endstellung, die Offenstellung, mittels eines zweiarmigen Hebels bewegt werden, dessen einer Arm am unteren Abschnitt angreift und dessen anderer Arm als Taste für den Benutzer ausgebildet ist.

Ein Nachteil dieser bekannten Auslaufventile ist, daß trotz des großen Überdeckungsbereiches der teleskopartig ineinander verschiebbaren rohrförmigen Abschnitte Heißwasser seitlich austreten kann, vor allem wenn bei vollständig gefülltem Heißwasserbehälter der Druck am Boden des Behälters besonders groß ist.

Außerdem haben die bekannten Auslaufventile den Nachteil, daß sie aus mehreren gegeneinander beweglichen Teilen bestehen, daher kompliziert in der Fertigung und anfällig gegenüber Störungen sind.

Diese erfindungsgemäße Maßnahme hat demgegenüber den Vorteil, daß ein seitliches Austreten von Heißwasser zwischen den Abschnitten sicher vermieden wird und daher ein Austreten von Heißwasser in das Innere des Küchengerätes oder gar eine Verletzung des Benutzers durch Austreten von Heißwasser neben dem zur Aufnahme des Heißwassers bestimmten Gefäß vermieden wird.

Bei einer Ausgestaltung der Erfindung nimmt das Verschlußstück durch Anlage am oberen Abschnitt seine Schließstellung ein und reicht mit einem nach unten weisenden Fortsatz in den Bereich des unteren Abschnittes hinein.

Das Verschlußstück kann dabei als von den Abschnitten getrenntes Teil ausgebildet sein, wobei der Fortsatz durch eine Mitnahme des unteren Abschnittes in die Offenstellung des Verschlußstückes bewegbar ist, bei einer anderen Ausführungsform der Erfindung ist jedoch der Fortsatz mit dem unteren Abschnitt fest verbunden.

Die erstgenannte Alternative mit der Mitnahmeverbindung hat dabei den Vorteil, daß zunächst eine gewisse tote Zone vom unteren Abschnitt durchfahren werden muß, ehe das Auslaufventil durch Abheben des Verschlußstückes vom Ventilsitz öffnet, so daß bei zufälligem Berühren des unteren Abschnittes nicht sofort Heißwasser austritt.

0165494

Die zweitgenannte Variante hat demgegenüber den Vorteil, daß der Fortsatz mit dem unteren Abschnitt einstückig sein und daher leichter produziert und montiert werden kann. Außerdem sind weniger bewegte Teile erforderlich, insbesondere kann eine Vorspannung des Ventilstückes von oben, wie dies bei einem getrennten Teil ratsam ist, entfallen.

Bei einer weiteren Ausgestaltung der Erfindung nimmt das Verschlußstück durch Anlage am unteren Abschnitt seine Schließstellung ein und ist mit einem nach oben weisenden Fortsatz versehen, der mit dem oberen Abschnitt verbunden ist.

Diese Variante der Erfindung ist mit den vorgenannten sinngemäß gleichwertig, da sie lediglich eine kinematische Umkehr dieser Varianten darstellt.

Bei einem besonders bevorzugten weiteren Ausführungsbeispiel der Erfindung ist unterhalb des unteren Abschnittes ein weiterer balgenartiger Abschnitt und daran wiederum ein weiterer rohrförmiger und vorzugsweise durch Verbindung mit einem Gehäuse des Küchengerätes raumfester Abschnitt angeordnet.

Diese Maßnahme hat den Vorteil, daß sich die Bewegungsvorgänge des Auslaßventils ausschließlich innerhalb des Gerätegehäuses abspielen, so daß Fehlbedienungen weitgehend vermieden werden können, weil das Ventil ohnehin über einen geeigneten Hebelmechanismus betätigt werden muß, der so gestaltet werden kann, daß ein unbeabsichtigtes Austreten von Heißwasser sicher vermieden werden kann.

Bei einer Variante dieser Ausführungsform nimmt das Verschlußstück durch Anlage am weiteren Abschnitt seine Schließstellung ein, reicht mit einem nach oben weisenden Fortsatz in den Bereich des unteren Abschnittes hinein und steht dort mit diesem in Mitnahmeverbindung.

Auch diese Maßnahme hat den Vorteil, daß das Verschlußstück durch den Druck der auf ihm lastenden Wassersäule des Heißwasserbehälters von selbst in der Schließstellung gehalten wird und nur gegen den Druck der Wassersäule geöffnet werden kann.

Bei allen vorgenannten Ausführungsformen kann gemäß einer bevorzugten Weiterbildung der Erfindung das Verschlußstück rotationssymmetrisch sein und in der Schließstellung entlang einer Kreislinie oder Zylinder- oder Kegelfläche an der Innenseite eines der Abschnitte anliegen.

Hierdurch ergibt sich eine besonders gute und zuverlässige Dichtwirkung.

Die Anlagefläche wird dabei bevorzugt auf seiten der Abschnitte durch eine Schräge an deren Innenseite gebildet.

Das Verschlußstück kann andererseits im Bereich der Anlagefläche mit einer Ringwulst versehen sein, so daß die Dichtwirkung noch weiter erhöht wird.

Eine besonders gute Wirkung wird erfindunsgemäß weiter dadurch erzielt, daß das Verschlußstück bzw. dessen Ventilsitz in seiner Schließstellung gegen die Kraft einer Feder gehalten wird.

Diese Maßnahme hat den Vorteil, daß entweder die Kraft der Wassersäule, insbesondere bei nahezu entleertem Heißwasserbehälter, durch die Kraft der Feder unterstützt wird oder daß auch solche Varianten möglich sind, bei denen das Verschlußstück mit dem Druck der Wassersäule, jedoch gegen den Druck der dann stärker auszulegenden Feder öffnet.

Bei einer besonders bevorzugten Ausgestaltung aller vorstehend genannten Varianten sind die Abschnitte miteinander einstückig und werden durch ein einziges, elastisch verformbares Kunststoffteil gebildet. Besonders bevorzugt ist dabei, wenn das Verschlußstück über sternförmig verteilte Stege mit dem unteren Abschnitt verbunden und einstückig ist.

Diese Maßnahme hat den Vorteil, daß das gesamte Auslaufventil aus einem einzigen Kunststoffteil hergestellt sein kann, so daß nicht nur die Herstellung und Montage wesentlich vereinfacht, sondern aufgrund des nur einen Teiles auch die Betriebssicherheit erhöht wird. Schließlich werden auch Wartungsarbeiten erleichtert, weil im Falle einer Störung nur das eine Teil ausgetauscht werden muß.

Weitere Ausführungsbeispiele der Erfindung zeichnen sich dadurch aus, daß ein Vorratsbehälter vorgesehen ist, der mit einem nach unten ragenden Hals in den Heißwasserbehälter hineinragt, daß das untere Ende des Halses einen Abstand vom Boden und vom oberen Rand des Heißwasserbehälters hat und daß der Vorratsbehälter von dem Heißwasserbehälter abnehmbar ist.

Die Öffnung des Vorratsbehälters befindet sich bei betriebsbereitem Haushaltsgerät unten. Vorzugsweise weist der Vorratsbehälter außer dieser im Bereich des Halses liegenden Öffnung keine weitere Öffnung auf. Falls weitere Öffnungen vorhanden sind, so müssen diese luftdicht verschließbar sein.

Dadurch, daß der Hals in das Gefäß des Wassererhitzers hineinragt, kann aus dem Vorratsbehälter Wasser nur so lange ausfließen, wie der Wasserspiegel im Gefäß des Wassererhitzers noch nicht den unteren Rand des Halses erreicht hat. Dadurch wird sichergestellt, daß das Gefäß, ausreichenden Wasservorrat vorausgesetzt, stets bis zu einer vorbestimmten Höhe mit kaltem Wasser gefüllt wird, das dann anschließend erhitzt wird. Dadurch, daß der Vorratsbehälter von dem Gefäß abnehmbar ist, kann der Vorratsbehälter leicht, beispielsweise unter der Wasserleitung, mit frischem Wasser gefüllt werden, wenn dies erforderlich ist.

Gemäß einer Ausführungsform der Erfindung ist in den Weg zwischen dem Inneren des Vorratsbehälters und das äußere Ende des Halses eine Absperrvorrichtung für das Wasser eingeschaltet. Ist eine derartige Absperrvorrichtung nicht vorhanden, so ist zum Aufsetzen des Vorratsbehälters auf das Haushaltsgerät etwas Geschick erforderlich, um dieses Aufsetzen so vorzunehmen, daß dabei nicht störend viel Wasser ausfließt. Von Vorteil ist, daß durch die Absperrvorrichtung das Ausfließen von Wasser verhindert werden kann und daher das Aufsetzen des Vorratsbehälters auf das Gerät vereinfacht ist. Eine derartige Absperrvorrichtung hat den weiteren Vorteil, daß dann, wenn diese Vorrichtung den Wasserablauf sperrt, von dem zubereiteten Heißwasser wahlweise nur eine geringe Menge durch Öffnen des Heißwasserauslasses entnommen werden kann, wobei der Wasserspiegel im Gefäß sinkt, und daß trotzdem kein kaltes Wasser nachfließt, so daß das restliche

0165494

Heißwasser noch heiß bleibt. Eine derartige Betriebsweise kann sich empfehlen, wenn die zuerst entnommene Heißwasser dazu dienen soll, irgendeine Substanz zur Speisen- oder Getränkezubereitung nur anzubrühen, um nach Verstreichen einer gewissen Zeit die restliche Wassermenge zuzugeben, wie dies beispielsweise beim Filtern von Kaffee beim Aufbrühen von Hand häufig gemacht wird. Wird eine derartige Absperrvorrichtung nicht vorgesehen, so könnte es zweckmäßig sein, das Haushaltsgerät so zu betreiben, daß stets die zubereitete Heißwassermenge auf einmal entnommen wird und daß dieses Entnehmen so rasch erfolgt, daß das inzwischen aus dem Vorratsbehälter nachströmende kalte Wasser keine merkliche Temperaturerniedrigung des Heißwassers bewirkt. Es müßte daher das frische Wasser verhältnismäßig langsam nachströmen und das Heißwasser demgegenüber verhältnismäßig rasch durch den Heißwasserauslaß entnommen werden können.

Bei einer Ausführungsform der Erfindung weist der Vorratsbehälter eine Flasche mit einem mit Gewinde versehenen Flaschenhals auf, auf den ein die Öffnung des Flaschenhalses abdeckendes Ansatzstück aufgeschraubt ist, das den Hals aufweist, daß das Ansatzstück eine ringförmige Dichtfläche aufweist, gegen die die Stirnfläche des Flaschenhalses durch eine Schraubbewegung anpreßbar ist, und daß mindestens eine das Ansatzstück durchdringende Aussparung vorgesehen ist, die dann, wenn die Stirnfläche des Flaschenhalses von der Dichtfläche abgehoben ist einen Wasserdurchlaß vom Vorratsbehälter zum Wassererhitzer bildet.

Bei dieser Ausführungsform der Erfindung ist die Flasche dann, wenn die Stirnfläche des Flaschenhalse fest gegen die Dichtfläche geschraubt ist, vollständig dicht abgeschlossen, und es kann daher kein Wasser ausfließen. In diesem abge-

13

0165494

schlossenen Zustand kann daher der Vorratsbehälter ohne Verlust von Wasser mit nach unten ragendem Hals auf den Heißwasserbereiter aufgesetzt werden. Es ist dann möglich, durch eine kurze Schraubbewegung die Stirnfläche des Flaschenhalses von der Dichtfläche abzuheben, so daß dann durch die Aussparung Wasser in das Gefäß fließen kann, bis der Wasserspiegel den unteren Rand des Halses erreicht hat. Dann kann der Benutzer, wenn er dies wünscht, die Flasche wieder durch eine (bei Rechtsgewinde) Rechtsdrehung dicht schließen, so daß im Anschluß an die Entnahme des Heißwassers aus dem Vorratsbehälter kein frisches Wasser nachfließt, bis die gemäß dieser Ausführungsform speziell ausgebildete Absperrvorrichtung durch eine Linksdrehung der Flasche relativ zu dem Ansatzstück wieder geöffnet worden ist. Die Aussparung kann in die Dichtfläche münden oder in Strömungsrichtung des Wassers hinter der Dichtfläche liegen. Es versteht sich, daß das Gewinde des Flaschenhalses so dicht in dem Ansatzstück sitzen muß, daß nicht seitlich Wasser austritt.

Bei einer Ausführungsform der Erfindung ist die Außenseite des Halses des Ansatzstückes unrund und weist insbesondere axial verlaufende Vorsprünge und/oder Nuten auf, und der Hals wirkt mit einer an die Außenseite des Halses angepaßten Öffnung eines den Behälter nicht luftdicht verschließenden drehfesten Deckels zusammen, derart, daß das Ansatzstück im aufgesetzten Zustand drehfest am Haushaltsgerät befestigt ist. Diese Ausführungsform ermöglicht es, bei ausreichender Standfestigkeit des gesamten Haushaltsgeräts den Wasserausfluß des Vorratsbehälters dadurch zu steuern, daß der Benutzer lediglich die Flasche ergreift und im gewünschten Drehsinn verdreht. Es ist nicht erforderlich, dabei das Ansatzstück mit der Hand festzuhalten. Durch die geschilderte Ausführungsform wird daher die Handhabung des Geräts erleichtert.

Weitere Vorteile ergeben sich aus der Beschreibung und der beigefügten Zeichnung. Es sei betont, daß die Erfindung keineswegs auf die vorstehend genannten und nachstehend noch geschilderten sowie in der Zeichnung dargestellten Merkmale in den jeweils speziell angegebenen Kombinationen beschränkt ist, die genannten Merkmale können vielmehr auch in beliebigen anderen Kombinationen oder jeweils für sich allein verwendet werden, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1       eine Seitenansicht, teilweise im Längsschnitt, eines Küchengerätes;

Fig. 2       eine Vorderansicht des Küchengeräts gemäß Fig. 1;

Fig. 3       eine Seitenansicht des Küchengeräts gemäß Fig. 1 von einer anderen Seite, entsprechend dem Pfeil III in Fig. 2;

Fig. 4       einen Schnitt entsprechend der Linie IV-IV in Fig. 1 durch das Küchengerät mit einer Draufsicht auf den Filterträger;

Fig. 5       einen Längsschnitt durch einen als Flasche ausgebildeten Vorratsbehälter;

Fig. 6       einen Längsschnitt durch ein Ansatzstück;

Fig. 7       einen Längsschnitt durch einen Deckel des Küchengerätes;

Fig. 8       eine Ansicht des Ansatzstückes von unten, entsprechend dem Pfeil VIII in Fig. 6;

Fig. 9       eine Draufsicht auf den Deckel entsprechend dem
             Pfeil IX in Fig. 7;

Fig. 10      eine schematische Darstellung im Schnitt eines
             Auslaufventils in einem erfindungsgemäßen Küchengerät;

Fig. 11      eine Variante der Anordnung gemäß Fig. 10, in
             vergrößertem Maßstab;

Fig. 12      eine Ansicht von oben des in Fig. 11 dargestellten Auslaufventils in Richtung des Pfeiles XII
             von Fig. 11;

Fig. 13      eine Variante des Ausführungsbeispiels gemäß Fig.
             11 und 12;

Fig. 14a     weitere Varianten einer ersten Gruppe von Aus-
bis 14e      führungsbeispielen von Auslaufventilen;

Fig. 15a     weitere Varianten einer zweiten Gruppe von Aus-
und 15b      führungsbeispielen von Auslaufventilen.

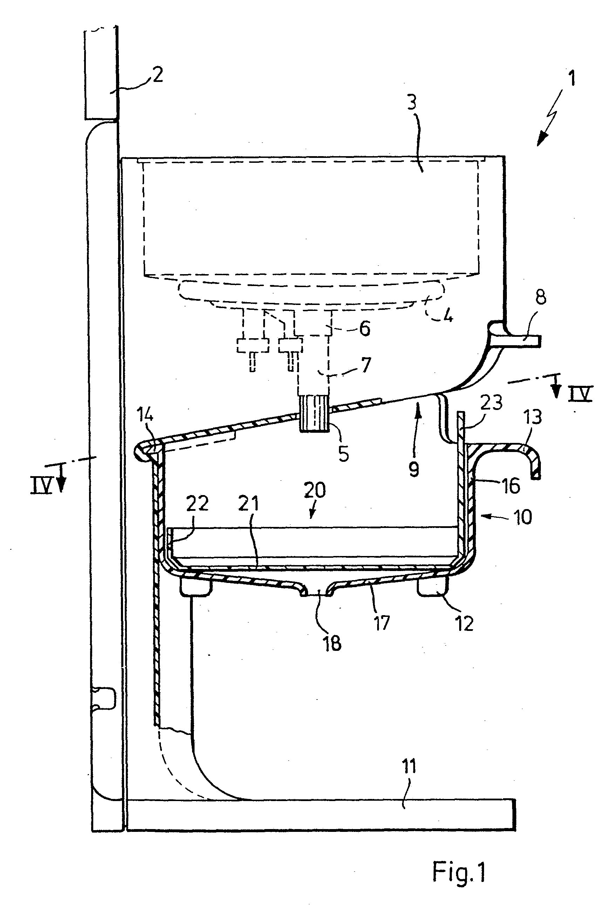

In Fig. 1 ist das Küchengerät, nachfolgend kurz Gerät 1
genannt, mit aufgeklapptem Deckel 2, der abgebrochen dargestellt ist. Das Gerät enthält einen elektrischen Wasserhitzer, der ein als Heißwasserbehälter ausgebildetes Gefäß 3

0165494

aufweist, das oben offen ist und bei geöffnetem Deckel 2 leicht gereinigt werden kann. Am Boden des Gefäßes 3 ist eine elektrische Heizschlange 4 angeordnet, durch die Wasser im Gefäß 3 erhitzt werden kann. Das Gefäß 3 weist einen mittig angeordneten Heißwasserauslaß 5 auf, der mit einem Auslaufstutzen 6 des Gefäßes 3 über eine nur angedeutete Schlauchklemme 7 in Verbindung steht, die normalerweise den Wasserdurchlaß sperrt, jedoch durch Drücken eines aus der Gerätevorderseite herausragenden Betätigungshebels 8 nach unten zeitweilig geöffnet werden kann. Der Heißwasserauslaß 5 ragt durch eine Aussparung in einem den Heißwasserbereiter nach unten abdeckenden Wandteil 9 nach unten heraus. Unmittelbar an das Wandteil 9 schließt sich unterhalb von diesem ein Filterträger 10 an, der vom gesamten Gerät lösbar ist. In den Filterträger werden ein kreisrundes Filterpapier und gemahlener Kaffee gegeben. Durch aus dem Heißwasserauslaß 5 ausfließendes heißes Wasser wird der Kaffee gebrüht, und der fertige Kaffee gelangt über Auslaßöffnungen des Filterträgers 10 in eine darunter auf einer Abstellplatte 11 des Geräts 1 abzustellende Tasse.

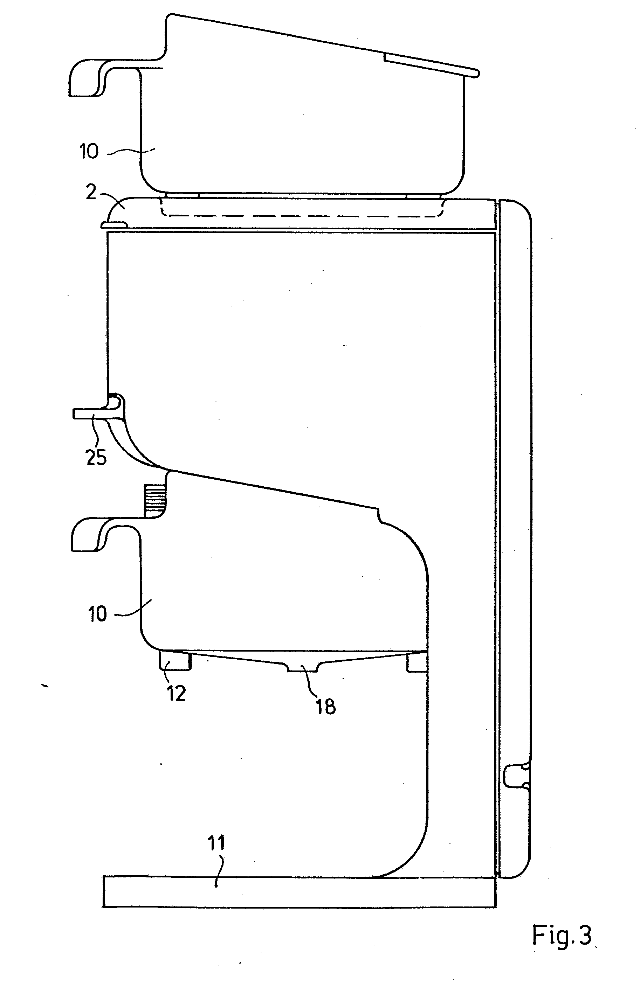

Der Filterträger 10 ist in der Draufsicht im wesentlichen kreisrund. Er weist Standfüße 12 auf, um ihn auf der Oberseite des Geräts 1 (Fig. 3) abstellen zu können. An der Vorderseite des Filterträgers 10 ist ein nach vorne vorspringender und nach unten abgebogener Handgriff 13 angeordnet, der es gestattet, den Filterträger 10 leicht mit einer Hand festzuhalten und aus dem Gerät 1 herauszuziehen. In der betriebsbereiten Position, in der sich der Filterträger 10 in Fig. 1 befindet, ragt der Filterträger 10 mit zwei im hinteren Bereich seines oberen Randes angeordneten von vorne nach hinten leicht schräg nach unten verlaufenden Leisten 14 in den Leisten 14 genau angepaßte Aussparungen 15 des ortsfesten Teils des Geräts 1. Die Aussparungen 15 haben die
Form von Nuten, und die Leisten 14 ragen so weit nach hinten
über die im übrigen kreiszylindrische Außenwandung 16 des
Filterträgers 10 vor, daß dieser durch die Leisten in den
Aussparungen 15 ausreichend fest gehalten ist, so daß das
Gewicht des Filterträgers samt Kaffeepulver und insbesondere
auch das Gewicht des in den Filterträger 10 einfließendes
Wassers von dieser formschlüssigen Verbindung nach Art einer
Steckverbindung sicher aufgenommen wird. Beim Einstecken des
Filterträgers 10 am ortsfesten Teil des Geräts führt der
Filterträger 10 eine von vorn nach hinten (in Fig. 3 von
lins nach rechts) verlaufende Bewegung aus, die gleichzeitig
von einer von oben nach unten verlaufenden Bewegung begleitet ist. Der Filterträger 10 ist daher durch die Schwerkraft
in seiner Verankerung gehalten und kann sich durch Erschütterungen nicht lösen. Es kann zweckmäßig sein, die geschilderte Steckbefestigung nicht allzu lose zu machen, sondern
zwischen den Aussparungen 15 und den Leisten 14 nahezu kein
Spiel vorzusehen, so daß der Filterträger 10 in der eingeschobenen Position mit seinem vorderen Bereich nicht sichtbar nach unten klappen kann. Durch das Gewicht des Filterträgers 10 versucht dieser, sich um seine Steckbefestigung
herumzuschwenken, und hierdurch werden Klemmkräfte erzeugt,
die zusätzlich bestrebt sind, den Filterträger fest in
seiner Verankerung zu halten.

Die Leisten 14 verlaufen im rückwärtigen Teil des Filterträgers 10 auf einem Umfangswinkel, der etwa 90° beträgt. Da
aus konstruktiven Gründen zwei derartige Leisten 14 mit
einem Abstand voneinander vorgesehen sind, ist der gesamte
Umfangswinkel, der von dieser Klemmbefestigung eingenommen wird, etwas größer als 90° und beträgt im Ausführungsbeispiel etwa 120°.

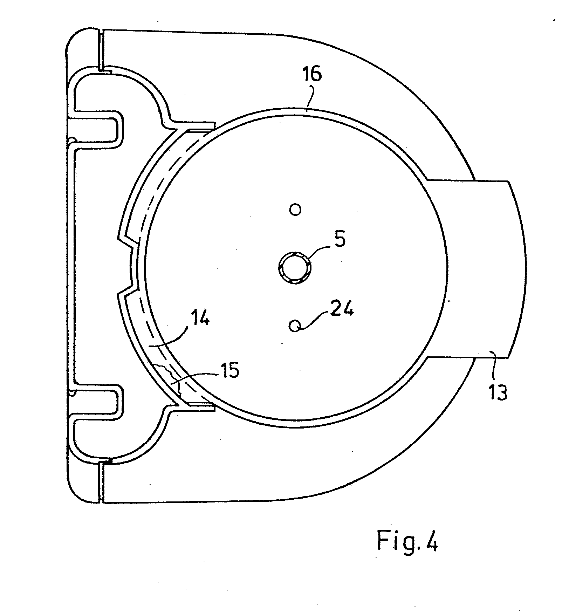

In der Darstellung der Fig. 4 sind diejenigen Teile des im wesentlichen aus Kunststoff gebildeten ortsfesten Teils des Geräts im Schnitt sichtbar, die die Aussparung 15 nach hinten und seitlich begrenzen, sowie die dahinter liegenden ortsfesten Teile des Geräts.

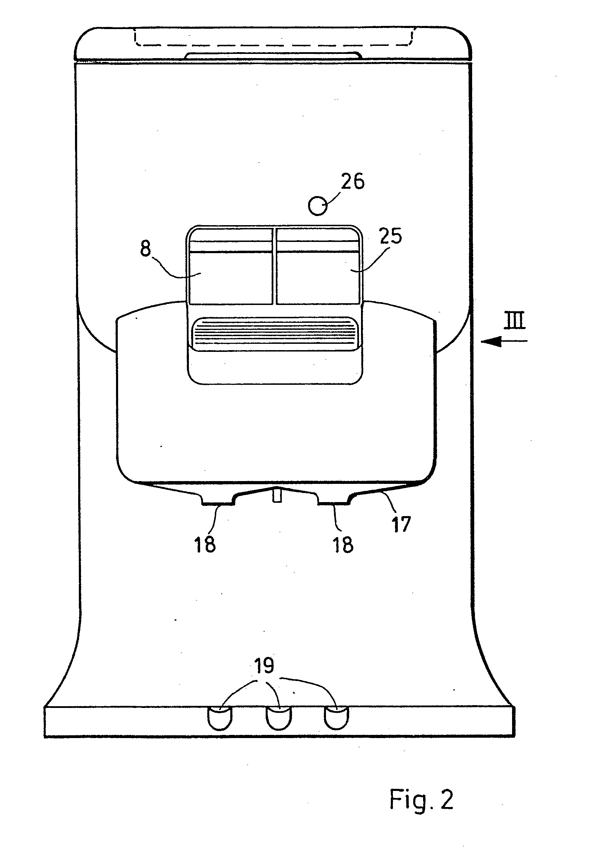

Der im wesentlichen topfförmige Filterträger 10 weist in seinem Boden 17 zwei im seitlichen Abstand voneinander angeordnete Öffnungen 18 auf. Der Abstand dieser Öffnungen ist geringer als der Durchmesser einer üblichen Tasse. Es kann daher entweder eine einzige Tasse so auf die Bodenplatte 11 aufgestellt werden, daß sie unter den beiden Öffnungen 18 steht, oder es können zwei Tassen seitlich unmittelbar nebeneinander auf die Bodenplatte 11 aufgestellt werden, so daß jede Tasse unter einer der Öffnungen 18 steht. Um dies zu erleichtern, sind auf der Oberseite der Bodenplat-te 11 rinnenförmige Vertiefungen 19 vorgesehen, die als Markierung dienen. Der Boden 17 verläuft zu jeder der Öffnungen 18 leicht trichterförmig, wie Fig. 2 zeigt.

Im Inneren des Filterträgers 10 ist ein Einsatz 20 angeordnet, der einen im wesentlichen ebenen Boden 21 und einen hochstehenden Rand 22 aufweist. An der Vorderseite ist statt des Randes 22 relativ geringer Höhe ein nach oben ragender Wandteil 23 vorgesehen, der es dem Benutzer erleichtert, den Einsatz 20 aus dem Filterträger 10 herauszunehmen. Der Boden 21 weist genau oberhalb der Öffnungen 18 jeweils ein Loch 24 mit 3 mm Durchmesser auf. Die Oberseite des Bodens 21 ist nicht völlig flach, sondern weist Rippen und Vorsprünge auf, die in der Zeichnung nicht dargestellt sind.

Auf den Boden 21 wird zur Benutzung des Geräts 1 ein kreisrundes Filterpapier aufgelegt, und auf dieses wird Kaffee
aufgeschüttet. Die genannten Rippen und Vorsprünge ermöglichen es dem gelösten Kaffe, unterhalb des Filterpapiers
rasch abzufließen und durch die Löcher 24 und die Öffnungen 18 in das unter diese gestellte Gefäß zu fließen. Es ist
auch möglich, den Filterträger ohne den Einsatz 20 zu benutzen; dann wird ein kreisrundes Stück Filterpapier unmittelbar auf den Boden 17 des Filterträgers aufgelegt.

Die Fig. 2 zeigt rechts neben dem Betätigungshebel 8 für die
Schlauchklemme einen Betätigungshebel 25, durch den der
elektrische Strom für die Heizschlange 4 eingeschaltet
werden kann. Über diesem Hebel 25 befindet sich eine Anzeigeleuchte 26, die den Betrieb des Geräts anzeigt.

Der Filterträger 10 und der Einsatz 20 bestehen aus durchsichtigem Kunststoff, so daß der Filtriervorgang auch optisch überwacht werden kann.

Im Ausführungsbeispiel hat die kreiszylindrische Außenwand 16 des Filterträgers 10 einen Durchmesser von etwa
110 mm. Die Leisten 14 ragen über die Wand 16 um etwa 5 mm
vor. Die maximale Höhe des Filterträgers einschließlich
seiner Füße 12 beträgt etwa 70 mm. Die übrigen Abmessungen
können der maßstäblichen Zeichnung entnommen werden.

Eine Portion Wasser, ausreichend für zwei Tassen, kann mit
dem erfindungsgemäßen Gerät innerhalb von 40 sec zum Sieden
erhitzt werden.

Bei dem bisher beschriebenen Ausführungsbeispiel wurde zum Betrieb des Geräts 1 zunächst der Deckel 2 hochgeklappt und alsdann das Gefäß 3 befüllt, beispielsweise aus einer Gießkanne oder direkt aus einem Wasserhahn.

Bei anderen Ausführungsbeispielen der Erfindung ist jedoch vorgesehen, diese Nachfüllvorgänge dadurch wesentlich zu vereinfachen, daß ein Vorratsgefäß für eine größere Anzahl von Portionen Heißwasser vorgesehen wird.

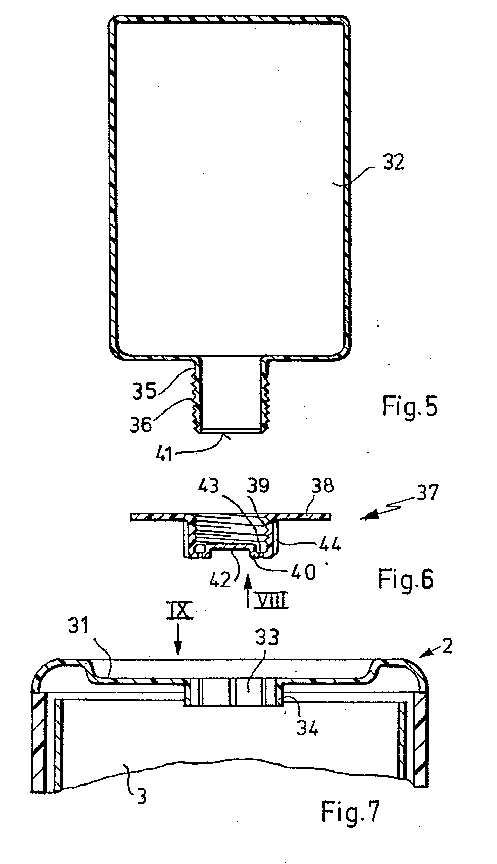

Die Fig. 5 bis 7 zeigen nach Art einer Explosionsdarstellung die hierzu erforderlichen Elemente.

Der Deckel 2 weist danach eine kreisförmige Vertiefung 31 auf, deren Durchmesser dem Außendurchmesser eines als Kunststoffflasche ausgebildeten Vorratsbehälters 32 angepaßt ist. Die kreisförmige Vertiefung 31 weist in ihrem Zentrum eine durchgehende Aussparung 33 auf, die durch einen nach unten ragenden rohrförmigen Ansatz 34 begrenzt ist.

Der Vorratsbehälter 32 weist einen Flaschenhals 35 mit Außengewinde 36 auf. Nach dem Befüllen des Vorratsbehälters 32, beispielsweise unter der Wasserleitung, wird auf den Flaschenhals 35 ein Ansatzstück 37 aufgeschraubt, das einen ringscheibenförmigen Teil 38 und einen sich daran anschließenden rohrförmigen Teil 39 aufweist, der ein zum Außengewinde 36 passendes Innengewinde trägt. Der rohrförmige Teil 39 ist an seinem unteren Endbereich nach innen umgebogen und bildet dort einen ringförmigen Sitz als Dichtfläche 40 für die Stirnfläche 41 des Flaschenhalses 35. Radial innerhalb des ringförmigen Sitzes 40 ist das rohrförmige Teil 39 durch ein plattenförmiges Teil 42 dicht verschlossen. Die ringförmige Dichtfläche 40 wird von einer Mehrzahl von Bohrungen 43 durchsetzt, die durch die Stirnfläche 41 des Flaschenhalses 35 abgedeckt werden, wenn der Vorratsbehälter 32 vollständig auf das Ansatzstück 37 aufgeschraubt ist. Wenn der Vorratsbehälter 32 dagegen von der ringförmigen Dichtfläche 40 abgehoben ist, so kann Wasser durch den Flaschenhals 35 und die Bohrungen 43 nach unten ausfließen, wobei Luft in die mit Ausnahme des Flaschenhalses 35 überall geschlossenen Vorratsbehälter 32 nachströmt.

Es wäre auch möglich, die durch Bohrungen 43 gebildeten Wasserdurchlässe an anderer Stelle vorzusehen; es ist lediglich wichtig, daß dann, wenn die Stirnfläche 41 auf der ringförmigen Dichtfläche 40 aufsitzt, der Weg des Wassers aus dem Innern des Vorratsbehälters 32 zu den Wasserdurchlässen versperrt ist.

Nachdem der gefüllte Vorratsbehälter 32 mit dem Flaschenhals 35 nach oben gerichtet durch Aufschrauben des Ansatzstücks 37 vollständig dicht verschlossen worden ist, wird der Vorratsbehälter 32 umgedreht, so daß nun der Flaschenhals 35 nach unten weist, und in dieser Stellung kann der Vorratsbehälter 32 auf den Deckel 2 aufgesetzt werden, ohne daß Wasser ausfließt. Das Ansatzstück 37 weist an der Außenseite des rohrförmigen Teils 39 axial verlaufende Rippen 44 auf, die in dazu passende Nuten 45, die in den rohrförmigen Ansatz 34 des Deckels 2 eingearbeitet sind, eingreifen. Dadurch ist das Ansatzstück 37 mit dem Deckel 2 drehfest verbunden. Der Benutzer kann nun durch eine Linksdrehung des Vorratsbehälters 32 die Abdeckung der Bohrungen 43 aufheben, so daß Wasser aus dem Vorratsbehälter 32 in das Gefäß 3

0165494

strömt. Das Wasser fließt so lange, bis der Wasserspiegel im Gefäß 3 das untere Ende der Bohrungen 43 erreicht hat. Dann kann keine Luft mehr ins Innere des Vorratsbehälters 32 nachströmen und daher auch kein Wasser mehr ausfließen. Der Benutzer kann nun durch eine Rechtsdrehung den Vorratsbehälter 32 wieder schließen, falls er dies wünscht. Nach dem Erhitzen des Wassers im Gefäß 3 und dem Auslassen des Wassers durch Betätigen der Schlauchklemme 7 kann der Benutzer durch erneutes Linksdrehen des Vorratsbehälters 32 wiederum eine genau bestimmte Menge Wasser in das Gefäß 3 nachfließen lassen.

Bei geöffneter Schlauchklemme 7 fließt das Wasser aus dem Gefäß 3 sehr viel rascher aus, als es aus dem Vorratsbehälter 32 nachströmt. Es ist daher auch möglich, dann, wenn kurz aufeinanderfolgend eine Mehrzahl von Portionen Heißwasser hergestellt werden soll, den Vorratsbehälter 32 nicht nach jedem Befüllvorgang des Gefäßes 3 zu verschließen, sondern offen zu lassen. Während das gerade zubereitete heiße Wasser ausfließt, kann nur relativ wenig kaltes Wasser nachfließen, so daß sich die Temperatur des Heißwassers nicht unerwünscht stark verringert. Sobald das Gefäß 3 wiederum vollständig, also bis zum unteren Ende der Bohrungen 43, mit Wasser gefüllt ist, kann der Benutzer einen nicht dargestellten elektrischen Schalter betätigen, wodurch das Wasser wiederum erhitzt wird. Dieser Schalter schaltet nach Erreichen einer vorbestimmten Temperatur automatisch ab.

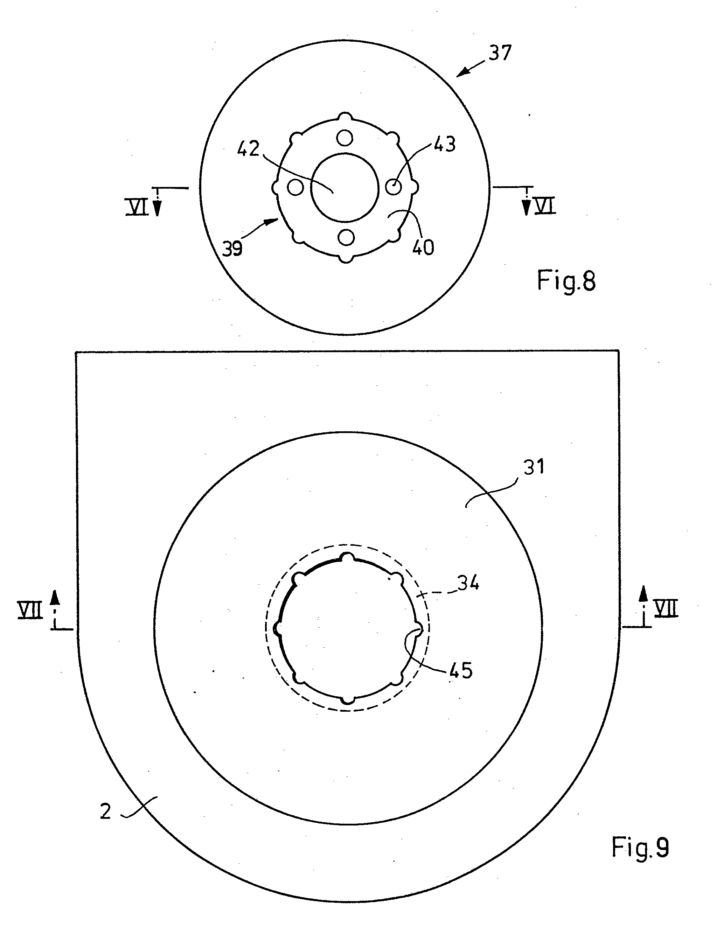

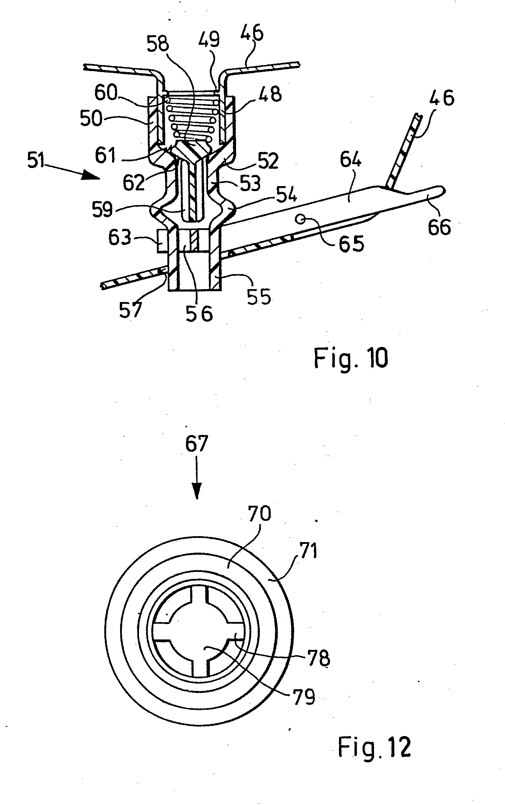

Wie bereits vorstehend zu den Fig. 1 bis 9 erläutert wurde, wird aus dem Gefäß 3 das heiße Wasser über den Heißwasserauslaß 5 dadurch ausgelassen, daß der Benutzer auf den Betätigungshebel 8 drückt. Der Betätigungshebel 8 kann, wie dies bereits erläutert wurde, ein Ventil in Gestalt der Schlauchklemme 7 schließen, es sind jedoch erfindungsgemäß auch andere Arten von Ventilen einsetzbar, wie dies nachstehend anhand der Ausführungsbeispiele gemäß Fig. 10 bis 15 geschildert wird:

In Fig. 10 bezeichnet 46 ein Gehäuse des im übrigen nicht weiter dargestellten Küchengerätes, wie es beispielsweise von der Art des Geräts 1 gemäß Fig. 1 bis 9 sein kann.

Im Gehäuse 46 befindet sich ein abgebrochen dargestellter Heißwasserbehälter 47, der an seinem tiefsten Punkt in einen Hals 48 übergeht. Auf der Innenseite des Halses 48 ist eine Ringschulter 49 angebracht.

Auf den Hals 48 ist ein erster rohrförmiger Abschnitt 50 eines Ventils 51 aufgeschoben, das vorzugsweise aus einem elastischen Kunststoff besteht, so daß der Abschnitt 50 unter engem Sitz auf den Hals 48 aufgeschoben oder dort ggf. mit einer geeigneten Rohrschelle gehalten werden kann.

Der rohrförmige Abschnitt 50 geht an seiner Unterseite in einen trichterförmigen Abschnitt 52, dieser in einen zweiten rohrförmigen Abschnitt 53, dieser in einen balgenartigen Abschnitt 54 und dieser wiederum in einen dritten rohrförmigen Abschnitt 55 über, der durch eine Öffnung 57 unten aus dem Gehäuse 46 herausragt. Im Inneren des dritten rohrförmigen Abschnittes 55 befinden sich vier über Kreuz angeordnete Stege 56, die zwischen sich einen kreissektorförmigen Raum freilassen.

24

Im Inneren des Ventils 51 befindet sich ein Verschlußstück 58, das unten in einen, in einer radialen Ebene kreuzförmigen Fortsatz 59 übergeht, der bis in den Bereich des
dritten rohrförmigen Abschnittes 55 reicht. Von oben wird
das Verschlußstück 58 mittels einer Schraubenfeder 60, deren
anderes Ende sich an der Ringschulter 49 abstützt, gegen den
trichterförmigen Abschnitt 52 gedrückt. Hierdurch liegt eine
Schräge 62 des Verschlußstückes 58 auf einer zugeordneten
Schräge 61 an der Innenseite des trichterförmigen Abschnittes 52 auf.

Der dritte rohrförmige Abschnitt 55 wird von einem Ende 63
eines zweiarmigen Hebels 64 umfaßt, der um einen Drehpunkt 65 drehbar ist. Das vom Ende 63 abgewandte Ende des
Hebels 64 läuft in einen Taster 66 aus.

Die Wirkungsweise des in Fig. 1 dargestellten Auslaufventils
ist wie folgt:

In der in Fig. 10 eingezeichneten Stellung befindet sich das
Ventil 51 in seiner Schließstellung, weil die Schraubenfeder 60 das Verschlußstück 58 mit dessen Schräge 62 gegen die
Schräge 61 des trichterförmigen Abschnittes 52 drückt.
Wird nun jedoch vom Benutzer der Taster 66 in Fig. 10 nach
unten gedrückt, hebt das Ende 63 des Hebels 64 den dritten
rohrförmigen Abschnitt 55 nach oben an, wobei gleichzeitig
der balgenartige Abschnitt 54 zusammengedrückt wird. Nach
Durchlaufen einer toten Zone, die dem Abstand der kreuzförmigen Stege 56 vom unteren Ende des Fortsatzes 59 in der
Schließstellung entspricht, nehmen die Stege 56 den Fortsatz 59 nach oben mit und heben das Verschlußstück 58 von
dem durch die Schräge 61 gebildeten Ventilsitz ab. Hierdurch kann das Wasser aus dem Heißwasserbehälter 47 am Verschlußstück 58 vorbei in ein Gefäß laufen, das der Benutzer unter
den dritten rohrförmigen Abschnitt 55 hält.

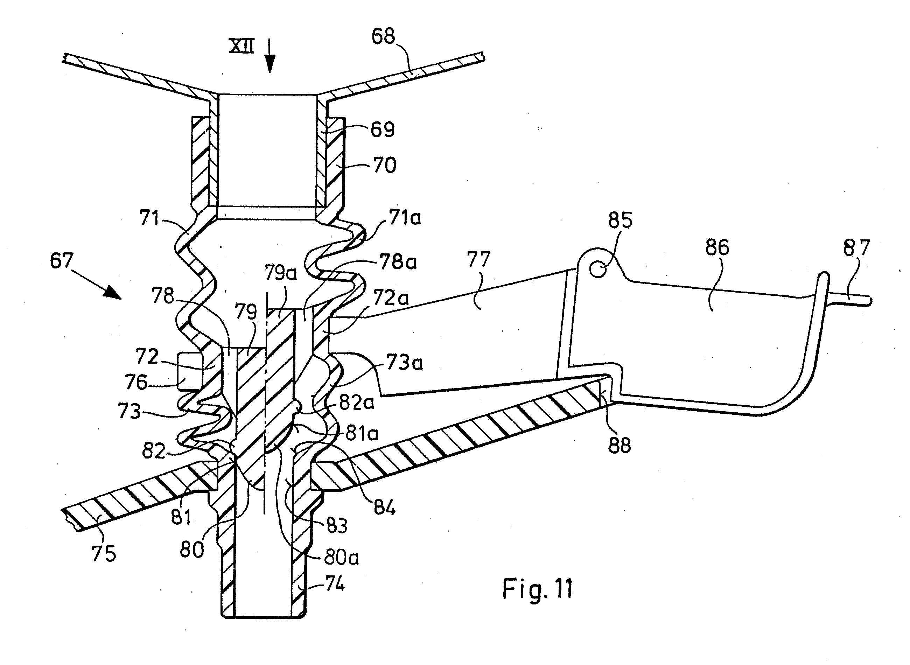

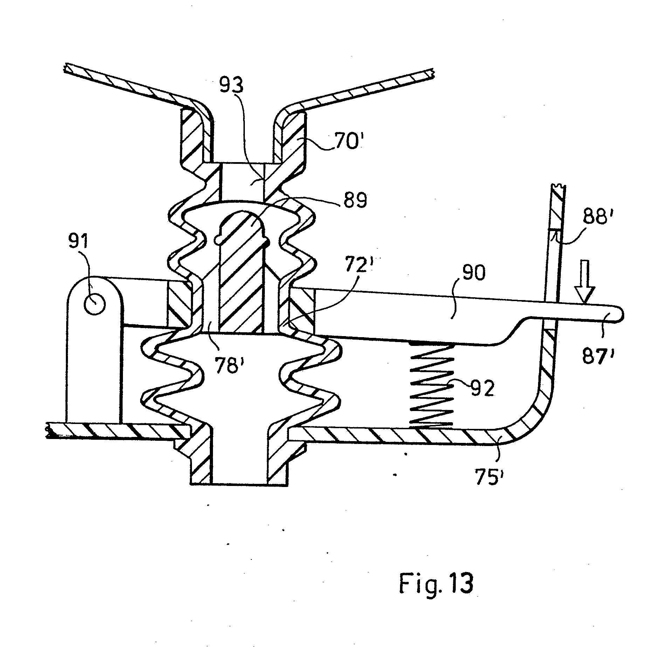

Bei dem in den Fig. 11 und 12 dargestellten weiteren Ausführungsbeispiel ist ein Ventil insgesamt mit 67 bezeichnet.

Ein Heißwasserbehälter 68 verfügt an seiner tiefsten Stelle
wiederum über einen Hals 69, auf den ein erster rohrförmiger
Abschnitt 70 des Ventils 67 geschoben ist. An den ersten
rohrförmigen Abschnitt 70 schließen sich nach unten ein
erster balgenartiger Abschnitt 71, daran ein zweiter rohrförmiger Abschnitt 72, daran ein zweiter balgenartiger
Abschnitt 73 und daran wiederum ein dritter rohrförmiger
Abschnitt 74 an.

Das Ausführungsbeispiel unterscheidet sich von demjenigen
der Fig. 10 dadurch, daß der unterste rohrförmige Abschnitt,
nämlich der Abschnitt 74 in Fig. 11, fest im Gehäuse 75
angeordnet, z.B. eingeklipst ist und lediglich der mittlere
rohrförmige Abschnitt 72 in der Höhe bewegt werden kann.

Um diese Bewegungen zu veranschaulichen, ist in Fig. 11 in
der linken Hälfte der Darstellung des Ventils 67 die
Schließstellung eingezeichnet und in der rechten Hälfte die
Offenstellung, wobei die Bezugszeichen der bewegten Teile in
der rechten Hälfte insgesamt mit einem "a" versehen sind.

Um den zweiten rohrförmigen Abschnitt 72 faßt wiederum ein
Ende 76 eines zweiarmigen Hebels 77, der um eine Achse 85
drehbar ist. Das dem Ende 76 entgegengesetzte Ende des

0165494

Hebels 77 besteht aus einem Griffstück 86, das in eine Taste 87 ausläuft. Griffstück 86 und Taste 87 ragen durch eine Öffnung 88 im Gehäuse 75.

Der zweite rohrförmige Abschnitt 72 weist, wie Fig. 12 zeigt, im Inneren des Ventils 67 ferner sternförmig angeordnete Stege 78 auf, die in der Mitte ein Verschlußstück 79 tragen, das an seiner Unterseite in ein konisches Ende 80 ausläuft. Oberhalb des konischen Endes 80 hat das Verschlußstück 79 die Gestalt eines zylindrischen Abschnittes 81, der an seiner Oberseite in eine Ringwulst 82 übergeht.

Der dritte rohrförmige Abschnitt 74 des Ventils 67 ist in entsprechender Weise an seiner Innenfläche mit einem zylindrischen Abschnitt 83 versehen, der im Bereich des Überganges zum zweiten balgenartigen Abschnitt 73 mit einer Schräge 84 versehen ist.

Die Wirkungsweise des in Fig. 11 dargestellten Ventils 67 ist wie folgt:

In der in der linken Hälfte von Fig. 11 dargestellten Schließstellung des Ventils 67 ist der erste balgenartige Abschnitt 71 gedehnt und der zweite balgenartige Abschnitt 73 zusammengedrückt. Das Verschlußstück 79 wirkt nun mit dem dritten rohrförmigen Abschnitt 74 in der Weise zusammen, daß die zylindrischen Abschnitte 81 bzw. 83 des Verschlußstückes 79 bzw. des dritten rohrförmigen Abschnittes 74 ineinanderfassen und die Ringwulst 82 auf der Schräge 84 aufliegt.

Durch diesen sehr guten Formschluß und zusätzlich den Druck der auf dem Verschlußstück 79 ruhenden Wassersäule des Heißwasserbehälters 68 ist das Ventil 67 sicher geschlossen.

Drückt nun der Benutzer die Taste 87 nach unten, gelangt das Verschlußstück 79a in seine obere Endstellung, in der der erste balgenartige Abschnitt 71a zusammengedrückt und der zweite balgenartige Abschnitt 73a gedehnt wird.

Das Verschlußstück 79a hebt nach oben ab, so daß das konische Ende 80a, der zylindrische Abschnitt 81a und die Ringwulst 82a außer Eingriff mit dem zylindrischen Abschnitt 83 bzw. der Schräge 84 kommen. Das heiße Wasser kann nun an den Stegen 78a vorbei nach unten aus dem dritten rohrförmigen Abschnitt 74 herausströmen.

Durch geeignete Maßnahmen, beispielsweise die Federcharakteristik der balgenartige Abschnitte 71, 73 und/oder durch Anordnen von Rückstellfedern kann erreicht werden, daß bei Loslassen der Taste 87 das Ventil 67 sicher von selbst wieder in die Schließstellung der linken Hälfte von Fig. 11 zurückkehrt.

Bei der in Fig. 13 dargestellten Variante des Ausführungsbeispieles gemäß Fig. 11 und 12 steht der zweite rohrförmige Abschnitt 72' über Stege 78' fest in Verbindung mit einem Verschlußstück 89, das mit einem zylindrischen Abschnitt 93 des ersten rohrförmigen Abschnittes 70' zusammenarbeitet.

Der zweite rohrförmige Abschnitt 72' wird von einem Hebel 90 umfaßt, der auf der einen Seite um eine Achse 91 schwenkbar ist und auf der anderen, gegenüberliegenden Seite eine Taste 87' aufweist, die durch eine Öffnung 88' des Gehäuses 75' ragt. Das der Achse 91 abgewandte Ende des Hebels 90 wird von einer Feder 92 beaufschlagt, die in Fig. 13 Hebel 90 nach oben drückt.

Fig. 13 zeigt die Offenposition des Auslaufventils, in der die Taste 87' gegen die Kraft der Feder 92 in Richtung des eingezeichneten Pfeiles ausgelenkt wurde. Das Verschlußstück 89 ist in dieser Betriebsweise vom zylindrischen Abschnitt 93 abgehoben und das Heißwasser kann ausfließen. Wird nun jedoch die Taste 87' losgelassen, drückt die Feder 92 den Hebel 90 nach oben und das Verschlußstück 89 gerät in Anlage zum zylindrischen Abschnitt 93.

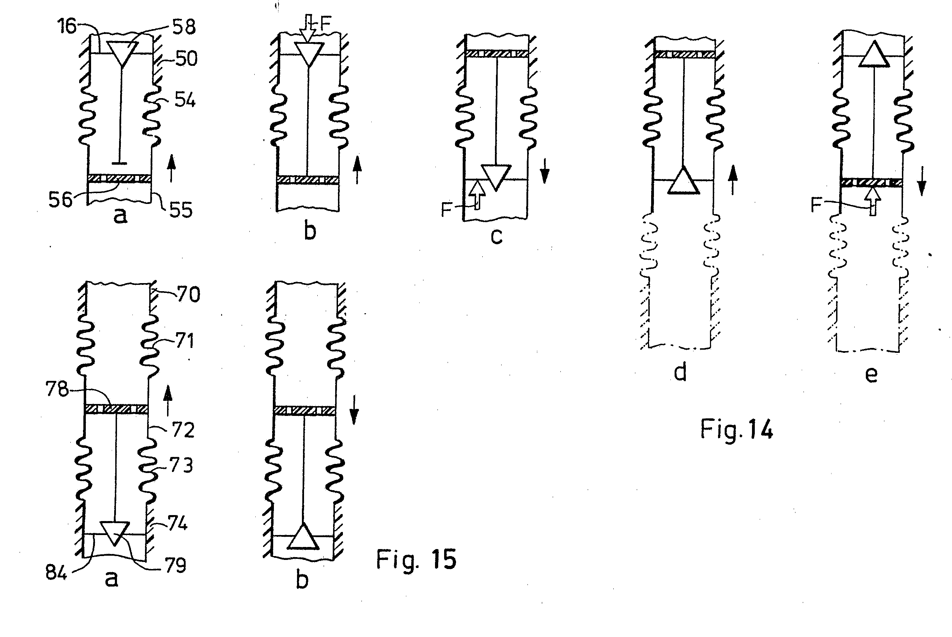

Obwohl die Erfindung vorstehend lediglich beispielhaft anzweier Ausführungsbeispiele erläutert wurde, versteht sich, daß durch kinematische Umkehr eine Fülle von Varianten auf der Grundlage des erfindungsgemäßen Prinzips möglich ist. Zur Veranschaulichung zeigen die Fig. 14 und 15 in stark schematisierter Form noch einige weitere Varianten, ohne diese jedoch erschöpfend aufzuzählen.

In Fig. 14a ist die Variante gemäß Fig. 10 dargestellt, bei der zwischen den Stegen 56 und dem Verschlußstück 58 lediglich eine lose Mitnahmeverbindung besteht. In der Schließstellung ruht daher zwar das Verschlußstück 58 auf der Schräge 61, ist unten jedoch von den Stegen 56 gelöst. Durch Bewegung der Stege 56 in Richtung des eingezeichneten Pfeiles wird das Ventil gemäß Fig. 14a geöffnet.

Bei der Variante gemäß Fig. 14b ist das Verschlußstück fest mit den Stegen verbunden, geöffnet wird das Ventil gemäß Fig. 14b in Richtung nach oben. Es kann bei diesen und auch bei den anderen Varianten eine Federkraft F vorgesehen sein, die das Verschlußstück sicher in der Schließstellung hält und deren Kraft überwunden werden muß, um das Ventil zu öffnen.

Bei der Variante gemäß Fig. 14c befinden sich die Stege im Bereich des oberen rohrförmigen Abschnittes und die Schräge im Bereich des unteren rohrförmigen Abschnittes. Das Verschlußstück ist fest mit den Stegen verbunden und die Öffnungsrichtung des Ventils gemäß Fig. 14c weist nach unten. Auch in diesem Falle kann eine Vorspannung durch eine Federkraft F vorgesehen werden, die bei dieser Variante nicht auf das Verschlußstück, sondern auf die Schräge, die als Ventilsitz dient, wirkt.

Bei der Variante gemäß Fig. 14d ist der Aufbau ähnlich wie bei der von Fig. 14c, jedoch ist durch die Wirkungsrichtung des Verschlußstückes die Öffnungsrichtung nach oben umgekehrt worden. Außerdem soll bei der Variante gemäß Fig. 14d veranschaulicht werden, daß sich weitere balgenartige oder rohrförmige Abschnitte unten anschließen lassen, um den gesamten Bewegungsvorgang innerhalb des Gehäuses eines Küchengerätes zu halten. Auf die Funktionsweise des Ventils hat dies jedoch keinen Einfluß.

Bei der Variante gemäß Fig. 14e befinden sich die Stege im Bereich des unteren rohrförmigen Abschnittes und die Schräge 6m Bereich des oberen rohrförmigen Abschnittes. Das Verschlußstück ist fest mit den Stegen verbunden und die Öffnungsrichtung des Ventils gemäß Fig. 14e weist nach unten. Die Funktionsweise dieses Ventils entspricht damit dem Ausführungsbeispiel gemäß Fig. 13.

Demgegenüber haben die zusätzlichen balgenartigen und rohrförmigen Abschnitte bei den Varianten gemäß Fig. 15a und 15b
Einfluß auf die Arbeitsweise des Ventils.

Die Variante gemäß Fig. 15a entspricht dem Ausführungsbeispiel gemäß Fig. 11, bei dem die Stege 78 sich am zweiten
rohrförmigen Abschnitt 72 befinden und das Verschlußstück 79
mit einer Schräge 84 am dritten rohrförmigen Abschnitt 74
zusammenarbeitet und mit den Stegen 78 fest verbunden ist.
Die Öffnungsrichtung dieses Ventils zeigt nach oben.

Will man die Öffnungsrichtung nach unten umdrehen, bietet
sich eine Variante gemäß Fig. 15b an, bei der lediglich die
Wirkungsrichtung des Verschlußstückes umgekehrt wurde.

Wie man aus den Beispielen von Fig. 14a bis 14e und 15a und
15d entnehmen kann, lassen sich praktisch beliebige Ausführungsformen finden, ohne den Rahmen der vorliegenden Erfindung zu verlassen.

Patentansprüche

1.  Küchengerät mit einem Gehäuse (46), einem Wassergefäß, einer Heizschlange (4) zum Erwärmen des Wassers und einem oberhalb einer Abstellplatte (11) für ein Auffanggefäß angeordneten Heißwasserauslaß (5), dadurch gekennzeichnet, daß das Wassergefäß als mit der Heizschlange (4) wärmeleitend verbundener Heißwasserbehälter (3; 47; 68) ausgebildet ist, der an seiner Unterseite in den Heißwasserauslaß (5) übergeht, daß der Heißwasserauslaß (5) mit einem Ventil (7; 51; 67) versehen ist und daß das Ventil (7; 51; 67) mittels eines an dem Gehäuse (46) angeordneten Betätigungselementes (8; 66; 87) betätigbar ist.

2.  Küchengerät nach Anspruch 1, dadurch gekennzeichnet, daß am Gerät (1) eine Halterung (14, 15) vorgesehen ist, an der ein Filterträger (10) für einen Kaffee-Filter, insbesondere Papierfilter, unterhalb des Heißwasserauslasses (5) lösbar befestigt ist, und daß der Filterträger (10) in seinem Boden (17) mindestens eine oberhalb der Abstellplatte (11) angeordnete Auslauföffnung (18) aufweist.

3.  Küchengerät nach Anspruch 2, dadurch gekennzeichnet, daß der Filterträger (10) zur Aufnahme eines ebenen, kreisförmigen Filterpapierstücks ausgebildet ist, wobei vorzugsweise in den Filterträger (10) ein aus dem Filterträger lösbarer Einsatz (20) eingesetzt ist, der einen mit mindestens einem Loch (24) versehenen, im wesentlichen ebenen Boden (21), der gegebenenfalls vorspringende Rippen oder dergleichen Vorsprünge aufweist, als Auflage für das Filterpapier aufweist.

2

0165494

4.  Küchengerät nach einem der Ansprüche 2 oder 3, dadurch gekennzeichnet, daß die Halterung durch eine ineinander eingreifende Leiste (14) und eine dazu passende Aussparung (15) gebildet ist, die an den beiden miteinander zu verbindenden Geräteteilen (ortsfester Teil des Küchengeräts 1 einerseits und Filterträger 10 andererseits) vorgesehen sind.

5.  Küchengerät nach Anspruch 4, dadurch gekennzeichnet, daß die Leiste (14) von vorn nach hinten (in Einschiebrichtung des Filterträgers 10 gesehen) schräg nach unten verläuft, wobei die Halterung (14, 15) vorzugsweise im Bereich der hinteren Hälfte des Filterträgers (10) vorgesehen ist.

6.  Küchengerät nach einem der vorhergehenden Ansprüche, dadurch gekennzeichnet, daß das Ventil einen oberen, an einer Öffnung des Wasserbehälters 47 angeschlossenen, rohrförmigen und raumfesten Abschnitt (50; 70) und einen unteren, in der gemeinsamen Achsrichtung der Abschnitte (50, 55; 70, 72) zwischen zwei Endstellungen beweglichen, weiteren rohrförmigen Abschnitt (55; 72) sowie ein Verschlußstück (58; 89) aufweist, das in der einen Endstellung des unteren Abschnittes (55, 72) den Durchfluß durch die Abschnitte (50, 55; 70, 72) freigibt und in der anderen Endstellung den Durchfluß versperrt, wobei der obere Abschnitt (50; 70) mit dem unteren Abschnitt (55; 72) über mindestens einen balgenartigen Abschnitt (54; 71) flüssigkeitsdicht verbunden ist.

7. Küchengerät nach Anspruch 6, dadurch gekennzeichnet, daß das Verschlußstück (58; 89) durch Anlage am oberen Abschnitt (50', 70') seine Schließstellung einnimmt und mit einem nach unten weisenden Fortsatz (59) in den Bereich des unteren Abschnittes (55; 72') hineinreicht.

8. Küchengerät nach Anspruch 7, dadurch gekennzeichnet, daß das Verschlußstück (58) als von den Abschnitten (50), 54, 55) getrenntes Teil ausgebildet ist, und daß der Fortsatz (59) durch eine Mitnahme des unteren Abschnittes (55) in die Offenstellung des Verschlußstückes (58) bewegbar ist.

9. Küchengerät nach Anspruch 7, dadurch gekennzeichnet, daß der Fortsatz des Verschlußstückes (89) mit dem unteren Abschnitt (72') fest verbunden ist.

10. Küchengerät nach Anspruch 6, dadurch gekennzeichnet, daß das Verschlußstück durch Anlage am unteren Abschnitt seine Schließstellung einnimmt und mit einem nach oben weisenden Fortsatz versehen ist, der mit dem oberen Abschnitt verbunden ist.

11. Küchengerät nach einem der Ansprüche 6 bis 10, dadurch gekennzeichnet, daß unterhalb des unteren Abschnittes (72) ein weiterer balgenartiger Abschnitt (73) und daran ein weiterer rohrförmiger und vorzugsweise durch Verbindung mit einem Gehäuse (75) des Küchengerätes raumfester Abschnitt (74) angeordnet sind, wobei insbesondere das Verschlußstück (53) über sternförmig verteilte Stege (52) mit dem unteren Abschnitt verbunden und einstückig ist.

4

0165494

12. Küchengerät nach Anspruch 11, dadurch gekennzeichnet, daß das Verschlußstück (79) durch Anlage am weiteren Abschnitt (74) seine Schließstellung einnimmt, mit einem nach oben weisenden Fortsatz in den Bereich des unteren Abschnittes (72) hineinreicht und dort mit diesem in Mitnahmeverbindung steht.

13. Küchengerät nach einem der Ansprüche 6 bis 12, dadurch gekennzeichnet, daß das Verschlußstück (58; 79) rotationssymmetrisch ist und in der Schließstellung entlang einer Kreislinie oder Zylinder- oder Kegelfläche an der Innenseite eines der Abschnitte (50; 74) anliegt, wobei vorzugsweise die Anlagefläche auf seiten der Abschnitte (52; 74) durch eine Schräge (61; 84) an deren Innenseite gebildet wird und ferner das Verschlußstück (79) im Bereich der Anlagefläche mit einer Ringwulst (82) versehen ist.

14. Küchengerät nach einem der Ansprüche 6 bis 13, dadurch gekennzeichnet, daß das Verschlußstück (58) bzw. dessen Ventilsitz in seiner Schließstellung gegen die Kraft einer Feder (60) gehalten wird.

15. Küchengerät nach einem der Ansprüche 6 bis 14, dadurch gekennzeichnet, daß die Abschnitte (50, 54, 55; 70, 71, 72, 73, 74) miteinander einstückig sind und durch ein einziges, elastisch verformbares Kunststoffteil gebildet werden.

16. Küchengerät nach einem der vorhergehenden Ansprüche, dadurch gekennzeichnet, daß ein Vorratsbehälter (32) vorgesehen ist, der mit einem nach unten ragenden Hals (35) in den Heißwasserbehälter (3) hineinragt, daß das untere Ende des Halses (35) einen Abstand vom Boden und vom oberen Rand des Heißwasserbehälters (3) hat, und daß der Vorratsbehälter (32) von dem Heißwasserbehälter (3) abnehmbar ist.

17. Küchengerät nach Anspruch 16, dadurch gekennzeichnet, daß in den Weg zwischen dem Inneren des Vorratsbehälters (32) und dem äußeren Ende des Halses (35) eine Absperrvorrichtung für das Wasser eingeschaltet ist, insbesondere, daß der Vorratsbehälter (32) eine Kunststoffflasche mit einem mit Außengewinde (36) versehenen Flachenhals (35) ist, auf den ein die Öffnung des Flaschenhalses (35) abdeckendes Ansatzstück (37) aufgeschraubt ist, daß das Ansatzstück (37) eine ringförmige Dichtfläche (40) aufweist, gegen die die Stirnfläche (41) des Flaschenhalses (35) durch eine Schraubbewegung anpreßbar ist, und daß mindestens eine das Ansatzstück (37) durchdringende Bohrung (43) vorgesehen ist, die bei von der Dichtfläche (40) abgehobener Stirnfläche (41) einen Wasserdurchlaß vom Vorratsbehälter (32) zum Heißwasserbehälter (3) bildet.

18. Küchengerät nach Anspruch 17, dadurch gekennzeichnet, daß die Außenseite eines rohrförmigen, den Flaschenhals (35) aufnehmenden Teiles (39) des Ansatzstückes (37) unrund ist, insbesondere axial verlaufende Rippen (44) und/oder Nuten (45) aufweist, die mit einer an die Außenseite des Halses angepaßten Aussparung (33) eines den Heißwasserbehälters (3) nicht luftdicht verschließenden drehfesten Deckels (2) zusammenwirken, derart, daß das Ansatzstück (37) im aufgesetzten Zustand drehfest mit dem Deckel (2) verbunden ist.

Fig.1

0165494

Fig. 2

0165494

10

2

25

10

12    18

11

Fig.3

Gm 1071 EP

0165494

Fig. 4

Gm 10 71 EP

Fig. 5

Fig. 6

Fig. 7

(10)

Gm 1071 EP

0165494

Fig.8

Fig.9

Fig. 10

Fig. 12

0165494

Fig.11

0165494

Fig. 13

Fig. 14

Fig. 15

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 165 681 (BELINKOFF) <br> * Insgesamt * | 1,2 | A 47 J 31/54 <br> A 47 J 31/10 <br> B 67 D 3/04 <br> B 67 D 3/00 |
| X | US-A-3 878 360 (AUGUSTINE) <br> * Insgesamt * | 1 | |
| A | US-A-3 584 568 (HAUSAM) <br> * Insgesamt * | 1,2,4 | |
| A | GB-A-1 510 114 (BRAHAM TEA & COFFEE) <br> * Figur 1 * | 2,4 | |
| A | US-A-2 522 102 (DOLD) <br> * Figur 1 * | 3 | |
| A | DE-A-3 102 432 (JEDE) <br> * Figur 1 * | 1,2,4 | RECHERCHIERTE SACHGEBIETE (Int. Cl.4) <br> A 47 J <br> B 67 D <br> F 16 K |
| A | BE-A- 568 730 (GACHOT) <br> * Insgesamt, insbesondere Seite 2, Zeilen 32-34 * | 6 | |
| A | FR-A-2 263 731 (OLYMPIA EXPRESS) <br> * Insgesamt * | 16 | |

Der vorliegende Recherchenbericht wurde für alle Patentansprüche erstellt.

| Recherchenort <br> DEN HAAG | Abschlußdatum der Recherche <br> 28-08-1985 | Prüfer <br> SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument